# EUROPÄISCHE PATENTSCHRIFT

(11) **EP 2 563 606 B1**
(45) Veröffentlichungstag und Bekanntmachung des Hinweises auf die Patenterteilung: **17.08.2016**
(21) Anmeldenummer: 11702139.4
(22) Anmeldetag: 20.01.2011
(51) Int. Cl.: B60D 1/62, B60R 16/03

(54) **VERBINDUNGSEINRICHTUNG FÜR EIN ANHÄNGEFAHRZEUG UND ANHÄNGEFAHRZEUG MIT VERBINDUNGSEINRICHTUNG**
CONNECTION DEVICE FOR A TRAILER AND TRAILER WITH THIS DEVICE
DISPOSITIF DE CONNEXION POUR UNE REMORQUE ET REMORQUE AVEC CE DISPOSITIF

(30) Priorität: 24.04.2010 DE 102010018127
(43) Veröffentlichungstag der Anmeldung: 06.03.2013
(73) Patentinhaber: WABCO GmbH, 30453 Hannover (DE)
(72) Erfinder: RISSE, Rainer, 30982 Pattensen-Reden (DE); STENDER, Axel, 31787 Hameln (DE)
(74) Vertreter: Lauerwald, Jörg
(86) Internationale Anmeldenummer: PCT/EP2011/000223
(87) Internationale Veröffentlichungsnummer: WO 2011/131264

(56) Entgegenhaltungen:
- EP-A2- 2 181 869
- WO-A1-2010/060493
- WO-A2-2010/010319
- DE-A1- 4 235 539
- DE-A1- 10 130 544
- DE-A1-102009 044 055
- WABCO Vehicle Control Systems: "TCE I/II Zentralelektronik im Anhängefahrzeug (2. Ausgabe)", , 2007, Seiten 1-76, XP002635332, Gefunden im Internet: URL:http://inform.wabco-auto.com/intl/pdf/ 815/00/30/8150200303t1.pdf?PHPSESSID=84387 f57070822438cec8cf15836d26f [gefunden am 2011-05-05]

## Beschreibung

Die Erfindung betrifft eine Verbindungseinrichtung für ein Anhängefahrzeug und ein Anhängefahrzeug mit einer derartigen Verbindungseinrichtung.

Anhängefahrzeuge für Lastkraftwagen weisen im Allgemeinen Bremssysteme und Lichtanlagen bzw. Beleuchtungsanlagen auf, die vom Zugfahrzeug angesteuert und mit Druckluft sowie Strom versorgt werden. Die Verbindung zwischen dem Anhängefahrzeug und dem Zugfahrzeug kann im Allgemeinen über Kupplungsköpfe des Anhängefahrzeuges erfolgen, die an die entsprechenden Kupplungsköpfe des Zugfahrzeuges (Motorwagen) angeschlossen werden, z. B. ein Kupplungskopf gelb für die pneumatische Brems-Steuerleitung und ein Kupplungskopf rot für die Vorrats- Druckluftleitung. Die weitere Verkabelung im Anhängefahrzeug erfolgt im Allgemeinen durch eine Einzeldrahtverlegung für die Beleuchtung und die Bremsanlage, so dass zwei Kabelstränge im Anhängefahrzeug separat durchgeführt werden.

Für die Anschlüsse sind grundsätzlich ISO-Normen vorgesehen. So ist insbesondere die ISO 7638 für die Ausbildung des Anschlusssteckers für die Bremsanlage bzw. die elektrischen Brems-Steuersignale, und die ISO 12098 für die Anschlüsse der Lichtanlage bzw. der Licht-Steuersignale vorgesehen. Hierbei sind für diese Anschlüsse getrennte Massen vorzusehen, um den gesetzlichen Bremsvorschriften / ECE R13 zu entsprechen. Weiterhin sind grundsätzlich auch ältere Anschlussnormen bekannt, z. B. 24N/S. Auch bei derartigen Systemen werden die elektrischen Steuerleitungen, insbesondere die Leitungen für die Fahrzeugbeleuchtung, einzeln verdrahtet durch das Anhängefahrzeug geführt.

Eine derartige Ausbildung führt somit zu einem entsprechenden Aufwand für die Kabelverlegung, die zudem bei unterschiedlichen Anhängefahrzeugen jeweils spezifisch durchzuführen ist.

Der Erfindung liegt die Aufgabe zugrunde, ein Steuersystem für ein Anhängefahrzeug und ein derartiges Anhängefahrzeug zu schaffen, die einen vergleichsweise geringen Montageaufwand ermöglichen.

Die DE 4235539 A offenbart eine Verbindungseinrichtung für ein Anhängefahrzeug mit Datenbus.

Diese Aufgabe wird durch ein Anhängefahrzeug nach Anspruch 1 gelöst. Die Unteransprüche beschreiben bevorzugte Weiterbildungen.

Der Erfindung liegt der Gedanke zugrunde, eine Verbindungseinrichtung bzw. eine Anschlussbox (Anschlusskasten) zu schaffen, die bereits ein elektronisches Steuergerät bzw. eine Steuereinrichtung und weiterhin relevante Eingänge für die Licht-Steuersignale und Brems-Steuersignale aufweist. Diese Verbindungseinrichtung kann insbesondere direkt an der Fahrzeugfront des Anhängefahrzeuges eingesetzt werden. Von der Steuereinrichtung geht ein fahrzeuginternes Anhänger-Datenbus-System mit den zusammengefassten Anschlüssen bzw. Leitungen aus, das sich insbesondere zu einer Brems-Steuereinrichtung des Bremssystems, d.h. z.B. dem Bremsmodulator, und zu den Beleuchtungseinrichtungen erstrecken kann.

Hierbei kann gemäß einer ersten Ausführungsform ein einziger Anhänger-Datenbus, d.h. ein fahrzeuginterner Datenbus des Anhängefahrzeugs vorgesehen sein, der die Steuereinrichtung der Verbindungseinrichtung, die Brems-Steuereinrichtung und die Leuchten bzw. Beleuchtungseinrichtungen des Anhängefahrzeuges, gegebenenfalls auch weitere Verbraucher umfasst. Somit geht von der Steuereinrichtung ein Datenbus aus, der vorzugsweise direkt zur Ansteuerung der Beleuchtungseinrichtungen dient.

Gemäß einer hierzu alternativen Ausführungsform kann von der Steuereinrichtung der Verbindungseinrichtung zunächst der Anhänger-Datenbus als erster Datenbus zur Brems- Steuereinrichtung abgehen, die selbst wiederum als Modulator dient, von der dann wiederum ein weiterer Datenbus als Anhänger-Licht-Datenbus zu den Beleuchtungseinrichtungen und gegebenenfalls weiteren Verbrauchern abgeht. Die über diesen weiteren Datenbus übertragenen Daten können somit zunächst in dem ersten Datenbus (Anhänger-Datenbus) zu der Brems-Steuereinrichtung übertragen werden und dann von der Brems-Steuereinrichtung über den weiteren Datenbus bzw. Anhänger-Licht-Datenbus übertragen werden.

Erfindungsgemäß kann insbesondere der Anhänger-Datenbus ein CAN-Bus sein; der weitere Datenbus bzw. Anhänger-Licht- Datenbus kann ebenfalls ein CAN-Bus oder auch ein Bus nach einer anderen Norm, z.B. ein LIN-Bus sein.

Erfindungsgemäß werden einige Vorteile erreicht. So kann der gesamte Verkabelungsaufwand, d. h. sowohl der Materialaufwand für die Verkabelung als auch der Montageaufwand für das Verlegen der Verkabelung deutlich reduziert werden. Durch den Anhänger-Datenbus, gegebenenfalls zusätzlich den Anhänger-Licht-Datenbus kann zudem eine hohe Flexibilität gegenüber Veränderungen des Systems erreicht werden, die z. B. beim Anschluss weiterer Verbraucher und für unterschiedliche Modelle bzw. Modelle mit variierenden Ausstattungen auftreten können, so dass erfindungsgemäß eine hohe Flexibilität bei hoher Sicherheit erreicht wird.

Die Steuereinrichtung der Verbindungseinrichtung kann erfindungsgemäß auch weitere Funktionen erfüllen, z.B. die Lasten durch die Leuchtmittel für die Lampenüberwachung im Zugfahrzeug simulieren.

Die Erfindung wird im Folgenden anhand der beiliegenden Zeichnung an einigen Ausführungsformen erläutert. Es zeigen:
- Fig. 1: eine schematische Aufsicht auf ein Anhängefahrzeug mit einem erfindungsgemäßen Steuersystem gemäß einer ersten Ausführungsform; und
- Fig. 2: eine der Fig. 1 entsprechende Darstellung einer zweiten Ausführungsform.

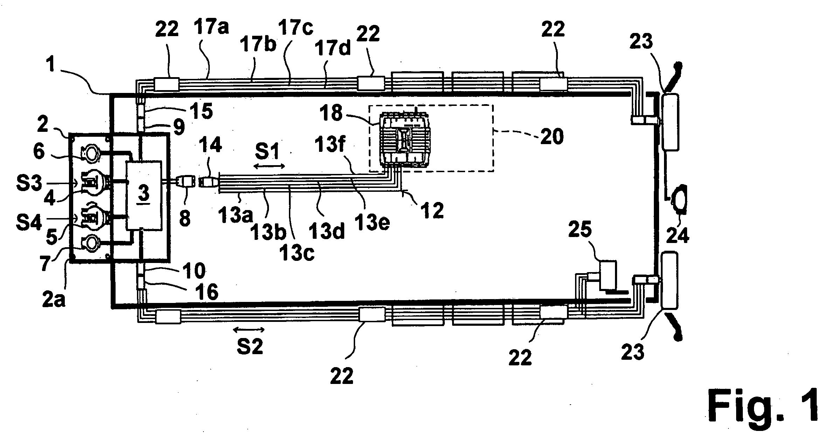

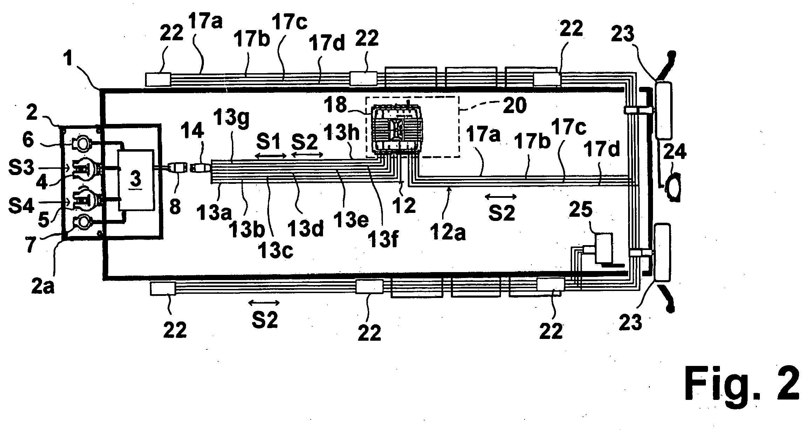

Ein Anhängefahrzeug 1 kann z. B. als Auflieger oder auch als Deichselfahrzeug ausgebildet sein und wird an ein hier nicht gezeigtes Zugfahrzeug bzw. Motorwagen angeschlossen. Das Anhängefahrzeug 1 weist an seiner hier links gezeigten Vorderseite eine Verbindungseinrichtung 2 auf, die einen Anschlusskasten 2 bzw. Frontkasten 2 bildet. Die Verbindungseinrichtung 2 weist gemäß Fig. 1 und 2 ein Gehäuse 2a auf, in dem eine ECU (Steuereinrichtung) 3 aufgenommen ist. Weiterhin weist die Verbindungseinrichtung 2 in oder an dem Gehäuse 2a eine erste Anschlusseinrichtung 4 gemäß ISO 7638 als Anschlussstecker für die Bremsanlage bzw. die Brems- Steuersignale S3 und eine zweite Anschlusseinrichtung 5 gemäß ISO 12098 als Anschlussstecker für die Lichtsignale S4 auf. Optional können weiterhin eine dritte Anschlusseinrichtung 6 als 24N und eine vierte Anschlusseinrichtung 7 als 24S, vorgesehen sein, wobei diese Anschlusseinrichtungen 6 und 7 grundsätzlich auch entfallen können. Die Anschlusseinrichtungen 4, 5 und ggf. 6, 7 sind innerhalb der Verbindungseinrichtung 2 jeweils mit der ECU 3 verbunden.

Erfindungsgemäß wird in dem Anhängefahrzeug 1 ein internes Datenbus-System gebildet. Gemäß Fig. 1 ist ein einziger Anhänger-Datenbus 12 vorgesehen. Hierzu ist die ECU 3 mit Bus-Anschlusssteckern 8, 9 und 10 versehen, die Teil der Verbindungseinrichtung 2 sein und ggf. aus der Verbindungseinrichtung 2 herausragen können.

Die Bus-Anschlussstecker 8, 9 und 10 dienen zum Anschluss an Gegenstecker 14, 15 und 16 des internen Anhänger-Datenbus 12. Gemäß der Ausführungsform der Fig. 1 dient der Anhänger-Datenbus 12 zur Verbindung der ECU 3 sowohl mit einer Brems-Steuereinrichtung 18 des hier lediglich als Block schematisch eingezeichneten Bremssystem 20 des Anhängefahrzeuges 1, als auch zum Anschluss der verschiedenen Beleuchtungseinrichtungen 22, 23, 24 des Anhängefahrzeuges 1, die insbesondere Seitenleuchten 22, Bremsleuchten 23 und hier nur schematisiert angegebenen Warnblinkleuchten 24, sowie ggf. von Spurhalteleuchten sein können.

Der Anhänger-Datenbus 12 kann zwischen der ECU 3 und der Brems-Steuereinrichtung 18 z. B. vier oder sechs einzelne Datenleitungen 13 a bis f aufweisen zur Übermittlung von anhängerinternen Brems-Steuersignalen S1. Bei Ausbildung als CAN-Datenbus können nach ISO 7638 somit eine erste Datenleitung 13a für die Spannungsversorgung (Power), weiterhin eine Masseleitung 13b und zusätzlich die CAN-High-Datenleitung 13c sowie die CAN-Low-Datenleitung 13d vorgesehen sein. Zusätzlich zu diesen vier Datenleitungen 13 können optional auch eine Bremslicht-Datenleitung 13e und ggf. einen zusätzlich aufgenommenen LIN-Bus 13f vorgesehen sein, so dass wie gezeigt sechs Datenleitungen 13 zwischen der Verbindungseinrichtung 2 und der Brems-Steuereinrichtung 18 ausgebildet sein können. Die Brems- Steuereinrichtung 18 kann somit auch die information des als Lichtsignals S4 übertragenen Bremslichtsignals (stop light power) aufnehmen, um bei Vorliegen des Bremslichtsignals auf eine Betätigung der Bremse zu erkennen, wenn ggf. die erste Anschlusseinrichtung 4 für die Bremsanlage nicht an das Zugfahrzeug angeschlossen sein sollte.

Zwischen der Verbindungseinrichtung 2 und den Beleuchtungseinrichtungen 22, 23 und 24 können z. B. drei oder vier Datenleitungen 17 a bis d vorgesehen sein, um fahrzeuginterne Licht-Steuersignale S2 zu übertragen, die insbesondere digital übermittelt werden können, wobei jede Beleuchtungseinrichtung separat adressiert werden kann. Die Verbindungseinrichtung 2 mit der ECU 3 dient somit dazu, die vom Zugfahrzeug über die Lichtsteckdose nach ISO 12098 (oder 24N/S) eingegebenen Licht-Steuersignale S4 einzulesen, weiterhin die über die Brems-Anschlusseinrichtung 4 eingegebenen Brems-Steuersignale S1 aufzunehmen, weiterhin über den Bus-Anschlussstecker 8 die Spannungsversorgung durchzuleiten, die Brems-Steuersignale S3 als CAN-Signale S1 durchzuleiten, und auch die Warnlampenleitung der ISO 7638-Steckdose zur Brems-Steuereinrichtung 18 bzw. zum Brems-Steuergerät durchzuleiten.

Weiterhin können die zusammengeführten Licht-Steuersignale S4, die über die zweite Anschlusseinrichtung 5 nach ISO 12098 aufgenommen wurden, über den Anhänger-Datenbus 12 als interne Licht-Steuersignale S2 umgesetzt werden.

Erfindungsgemäß können durch Einsatz eines gemeinsamen Anhänger-Datenbusses 12 sämtliche Leuchten 22, 23, 24 mit einer gemeinsamen Spannung versorgt werden. Die Ansteuerung der Leuchten (bzw. Beleuchtungseinrichtungen) 22, 23, 24 kann über den Anhänger-Datenbus 12 entsprechend dem über die zweite Anschlusseinrichtung 5 gemäß ISO 12098, ggf. auch für die Ansteuerung der Bremsleuchten 23 über das entsprechende CAN-Signal nach ISO 7638, erfolgen.

Ein weiterer Vorteil der Erfindung ist, dass sämtliche relevanten Daten, z. B. auch eine Anfahrhilfeanforderung, Luftachsanforderung u. s. w., zur Brems-Steuereinrichtung 18 übermittelt werden können.

Erfindungsgemäß ist es weiterhin auch möglich, dass die Leuchten 22, 23, 24 von der als Modulator dienenden Brems-Steuereinrichtung 18 über den Anhänger-Datenbus 12 gesteuert werden können, z. B. auf Anforderung eines Driver-Assistance-Systems.

Eine Simulation der Lasten bzw. der Belastungen durch die Leuchten 22, 23, 24 für die Lampenüberwachung kann auch im Zugfahrzeug erfolgen und entsprechend über Steuersignale zu der ECU 3 übermittelt werden.

Über den Anhänger-Datenbus 12 können auch weitere Anhänger-Komponenten 25, wie z. B. Liftachsventile oder RTR-Ventile angesteuert werden. Somit ist der interne Anhänger-Datenbus 12 erfindungsgemäß auch erweiterbar für weitere Funktionen.

Fig. 2 zeigt eine weitere Ausführungsform, bei der die Verbindungseinrichtung 2 grundsätzlich ähnlich oder sogar identisch wie in Fig. 1 ausgebildet ist. Allerdings weist die ECU (Steuereinrichtung) 3 lediglich den Bus-Anschlussstecker 8 für den Anhänger-Datenbus 12 zur Brems- Steuereinrichtung 18 des nicht detaillierter gezeigten Bremssystems 20 auf. Soiniohl die Brems-Steuersignale S1 als auch die Licht-Steuersignale S2 werden somit von der ECU 3 zunächst über den Fahrzeugbus 12 an die Brems- Steuereinrichtung 18 ausgegeben, vorzugsweise über die CAN-High-Datenleitung 13c sowie die CAN-Low-Datenleitung 13d. An die Brems- Steuereinrichtung 18 ist weiterhin ein Anhänger-Licht-Datenbus 12a angeschlossen, über den die Licht-Steuersignale S2 zu den Leuchten 22, 23, 24 übertragen werden. Somit dient die Brems- Steuereinrichtung 18 als Modulator zur Aufnahme und Übertragung der Licht-Steuersignale S2 und gegebenenfalls weiterer Signale an Verbraucher 25 und von den Leuchten 22, 23, 24 zurück an die ECU 3.

Die für den Anhänger-Licht-Datenbus 12a verwendete Datenleitung 30 kann in Fig. 2 somit z. B. sechs oder acht einzelne Leitungen 13a bis 13g aufweisen, z. B. die Leitungen 13a bis 13f für die Datenübertragung nach ISO 7638 wie in Fig. 1, sowie einen Versorgungsspannungsanschluss 13g nach ISO 12098 (Power ISO 12098) sowie einen Masseanschluss 13h nach ISO 12098 (Masse ISO 12098). Die Datenleitung des Anhänger-Datenbus 12a kann entsprechend Fig. 1 drei oder vier Datenleitungen 17a bis d zur Übertragung der Licht-Steuersignale S2 aufweisen.

## Patentansprüche

1. Anhängefahrzeug (1) mit einer Verbindungseinrichtung (2), wobei die Verbindungseinrichtung (2) mindestens aufweist:
eine erste Anschlusseinrichtung (4) zur Aufnahme von Brems-Steuersignalen (S3) von einem Zugfahrzeug, und
eine zweite Anschlusseinrichtung (5) zur Aufnahme von Licht-Steuersignalen (S4) von dem Zugfahrzeug, wobei die Verbindungseinrichtung (2) eine Steuereinrichtung (3) und eine Bus-Anschlusseinrichtung (8) für einen Anhänger-Datenbus (12) des Anhängefahrzeugs (1) aufweist,
wobei die Steuereinrichtung (3) die von der ersten Anschlusseinrichtung (4) und der zweiten Anschlusseinrichtung (5) aufgenommenen Signale (S3, S4) aufnimmt und diese Signale (S3, S4 ) oder aus diesen Signalen ermittelte Signale (S1, S2 ) über die Bus-Anschlusseinrichtung (8) an den Anhänger-Datenbus (12) ausgibt,
wobei die Verbindungseinrichtung direkt an der Fahrzeugfront des Anhängefahrzeugs eingesetzt ist, wobei die Verbindungseinrichtung einen Anschlusskasten bildet.

2. Anhängefahrzeug (1) nach Anspruch 1, **dadurch gekennzeichnet,**
**dass** es ein Gehäuse-(2a) zur Anbringung in einem vorderen Bereich des Anhängefahrzeugs (1) aufweist, wobei die Steuereinrichtung (3) in dem Gehäuse (2a) und die Anschlusseinrichtungen (4, 5) in oder an dem Gehäuse (2a) aufgenommen sind.

3. Anhängefahrzeug (1) nach einem der vorhergehenden Ansprüche),
**dadurch gekennzeichnet, dass** die Steuereinrichtung (3) über ihre Bus-Anschlusseinrichtung (8) und den Anhänger-Datenbus (12) mit
einer Brems-Steuereinrichtung (18) des Anhängefahrzeugs (1) verbunden ist.

4. Anhängefahrzeug (1) nach Anspruch 3, **dadurch gekennzeichnet,**
**dass** die Steuereinrichtung (3) über ihre Bus-Anschlusseinrichtung (8) lediglich mit der Brems-Steuereinrichtung (18) verbunden ist und an die Brems-Steuereinrichtung (18) sowohl die Brems-Steuersignale (S1) als auch die Licht-Steuersignale (S2) ausgibt.

5. Anhängefahrzeug (1) nach Anspruch 3, **dadurch gekennzeichnet,**
**dass** die Steuereinrichtung (3) über den Anhänger-Datenbus (12) weiterhin mit Beleuchtungseinrichtungen (22, 23, 24) des Anhängefahrzeugs verbunden ist und über den Anhänger-Datenbus (12; 12b) Licht-Steuersignale (S2) direkt an die Beleuchtungseinrichtungen (22, 23, 24) ausgibt.

6. Anhängefahrzeug (1) nach einem der vorhergehenden Ansprüche),
**dadurch gekennzeichnet, dass** die Steuereinrichtung (3) die Lasten durch die Beleuchtungseinrichtungen (22, 23, 24) des Anhängefahrzeugs (1) für die Lampenüberwachung im Zugfahrzeug simuliert.

7. Anhängefahrzeug (1) nach einem der vorherigen Ansprüche, mit einem Bremssystem (20) mit einer Brems-Steuereinrichtung (18),
und Beleuchtungseinrichtungen (22, 23, 24), und
einem Anhänger-Datenbus-System (12, 12a), an das die Steuereinrichtung (3) der Verbindungseinrichtung (2), die Brems-Steuereinrichtung (18) und die Beleuchtungseinrichtungen (22, 23, 24) zur bidirektionalen Datenübertragung angeschlossen sind, wobei von der Steuereinrichtung (3) der Verbindungseinrichtung (2) Brems-Steuersignale (S1) und Licht-Steuersignale (S2) an die Brems- Steuereinrichtung (18) und die Beleuchtungseinrichtungen (22, 23, 24) ausgegeben werden.

8. Anhängefahrzeug (1) nach Anspruch 7, **dadurch gekennzeichnet,**
**dass** als Anhänger-Datenbus-System (12) ein einziger Anhänger-Datenbus (12) vorgesehen ist, an den die Brems-Steuereinrichtung (18), die Beleuchtungseinrichtungen (22, 23, 24) und die Steuereinrichtung (3) der Verbindungseinrichtung (2) angeschlossen sind.

9. Anhängefahrzeug (1) nach Anspruch 8, **dadurch gekennzeichnet,**
**dass** das Anhänger-Datenbus-System (12) einen Anhänger-Datenbus (12) und einen Anhänger-Licht-Datenbus (12a) aufweist,
wobei die Steuereinrichtung (3) der Verbindungseinrichtung (2) und die Brems-Steuereinrichtung (18) an den Anhänger-Datenbus (12) angeschlossen sind, und die Brems-Steuereinrichtung (18) sowie die Beleuchtungseinrichtungen (22, 23, 24) an den Anhänger-Licht-Datenbus (12a) angeschlossen sind, und die Brems-Steuereinrichtung (18) von der Steuereinrichtung (3) Licht-Steuersignale (S2) über den Anhänger-Datenbus (12) aufnimmt und über den Anhänger-Licht-Datenbus (12a) weitergibt.

## Claims

1. Towed vehicle (1) having a connecting device (2), wherein the connecting device (2) has at least:
a first connection apparatus (4) for receiving brake control signals (S3) from a towing vehicle, and
a second connection apparatus (5) for receiving light control signals (S4) from the towing vehicle, wherein the connecting device (2) has a control device (3) and a bus connection apparatus (8) for a trailer data bus (12) of the towed vehicle (1), wherein the control device (3) receives the signals (S3, S4) received by the first connection apparatus (4) and the second connection apparatus (5) and outputs these signals (S3, S4) or signals (S1, S2) determined on the basis of these signals to the trailer data bus (12) via the bus connection apparatus (8), wherein the connecting device is used directly on the front of the towed vehicle, wherein the connecting device forms a connection box.

2. Towed vehicle (1) according to Claim 1, **characterized in that** it has a housing (2a) for mounting in a front region of the towed vehicle (1), wherein the control device (3) is accommodated in the housing (2a), and the connection apparatuses (4, 5) are accommodated in or on the housing (2a).

3. Towed vehicle (1) according to either of the preceding claims, **characterized in that** the control device (3) is connected via its bus connection apparatus (8) and the trailer data bus (12) to a brake control device (18) of the towed vehicle (1).

4. Towed vehicle (1) according to Claim 3, **characterized in that** the control device (3) is only connected to the brake control device (18) via its bus connection apparatus (8) and outputs both the brake control signals (S1) and the light control signals (S2) to the brake control device (18).

5. Towed vehicle (1) according to Claim 3, **characterized in that** the control apparatus (3) is also connected to lighting devices (22, 23, 24) of the towed vehicle via the trailer data bus (12), and outputs light control signals (S2) directly to the lighting devices (22, 23, 24) via the trailer data bus (12; 12b).

6. Towed vehicle (1) according to one of the preceding claims, **characterized in that** the control device (3) simulates the loads by means of the lighting devices (22, 23, 24) of the towed vehicle (1) for the monitoring of lamps in the towing vehicle.

7. Towed vehicle (1) according to one of the preceding claims, having a brake system (20) having a brake control device (18), and lighting devices (22, 23, 24) and a trailer data bus system (12, 12a) to which the control device (3) of the connecting device (2), the brake control device (18) and the lighting devices (22, 23, 24) are connected for the bidirectional transmission of data, wherein brake control signals (S1) and light control signals (S2) are output to the brake control device (18) and the lighting devices (22, 23, 24) by the control device (3) of the connecting device (2).

8. Towed vehicle (1) according to Claim 7, **characterized in that** a single trailer data bus (12) is provided as the trailer data bus system (12), to which trailer data bus (12) the brake control device (18), the lighting devices (22, 23, 24) and the control device (3) of the connecting device (2) are connected.

9. Towed vehicle (1) according to Claim 8, **characterized in that** the trailer data bus system (12) has a trailer data bus (12) and a trailer light data bus (12a), wherein the control device (3) of the connecting device (2) and the brake control device (18) are connected to the trailer data bus (12), and the brake control device (18) and the lighting devices (22, 23, 24) are connected to the trailer light data bus (12a) and the brake control device (18) receives light control signals (S2) from the control device (3) via the trailer data bus (12) and passes them on via the trailer light data bus (12a).

## Revendications

1. Véhicule remorque (1) avec un dispositif de connexion (2), le dispositif de connexion (2) comportant au moins :
un premier dispositif de raccordement (4) destiné à recevoir des signaux (S3) de commande de freinage d'un véhicule tracteur et un deuxième dispositif de raccordement (5) destiné à recevoir des signaux de commande des optiques (S4) du véhicule tracteur, le dispositif de connexion (2) comportant un dispositif de commande (3) et un dispositif de raccordement de bus (8) pour un bus de données (12) de la remorque du véhicule remorque (1),
le dispositif de commande (3) recevant les signaux (S3, S4) reçus par le premier dispositif de raccordement (4) et le deuxième dispositif de raccordement (5) et délivrant via le dispositif de raccordement de bus (8) lesdits signaux (S3, S4) ou des signaux (S1, S2) déterminés à partir desdits signaux au bus de données (12) de la remorque, le dispositif de connexion étant utilisé directement sur le front du véhicule remorque, le dispositif de connexion formant un caisson de raccordement.

2. Véhicule remorque (1) selon la revendication 1, **caractérisé en ce qu'**il comporte un boîtier (2a) destiné à être monté dans une région avant du véhicule remorque (1), le dispositif de commande (3) étant logé dans le boîtier (2a) et les dispositifs de raccordement (4, 5) étant logés dans ou sur le boîtier (2a).

3. Véhicule remorque (1) selon l'une quelconque des revendications précédentes, **caractérisé en ce que** par l'intermédiaire de son dispositif de raccordement de bus (8) et du bus de données (12) de la remorque, le dispositif de commande (3) est relié avec un dispositif de commande de freinage (18) du véhicule remorque (1).

4. Véhicule remorque (1) selon la revendication 3, **caractérisé en ce que** par l'intermédiaire de son dispositif de raccordement de bus (8), le dispositif de commande (3) est uniquement relié avec le dispositif de commande de freinage (18) et délivre au dispositif de commande de freinage (18) aussi bien les signaux de commande de freinage (S1) qu'également les signaux de commande des optiques (S2).

5. Véhicule remorque (1) selon la revendication 3, **caractérisé en ce que** par l'intermédiaire du bus de données (12) de remorque, le dispositif de commande (3) est relié par ailleurs avec des dispositifs d'éclairage (22, 23, 24) du véhicule remorque et par l'intermédiaire du bus de données (12 ; 12b) de la remorque, délivre des signaux de commande des optiques (S2) directement aux dispositifs d'éclairage (22, 23, 24).

6. Véhicule remorque (1) selon l'une quelconque des revendications précédentes, **caractérisé en ce que** le dispositif de commande (3) simule les charges dues aux dispositifs d'éclairage (22, 23, 24) du véhicule remorque (1) pour la supervision des ampoules dans le véhicule tracteur.

7. Véhicule remorque (1) selon l'une quelconque des revendications précédentes, avec un système de freinage (20), avec un dispositif de commande de freinage (18) et des dispositifs d'éclairage (22, 23, 24) et un système de bus de données (12, 12a) de la remorque sur lequel sont raccordés le dispositif de commande (3) du dispositif de connexion (2), le dispositif de commande de freinage (18) et les dispositifs d'éclairage (22, 23, 24) pour le transfert de données bidirectionnel, le dispositif de commande (3) du dispositif de connexion (2) délivrant des signaux de commande de freinage (S1) et des signaux de commande d'optiques (S2) au dispositif de commande de freinage (18) et aux dispositifs d'éclairage (22, 23, 24).

8. Véhicule remorque (1) selon la revendication 7, **caractérisé en ce qu'**en tant que système de bus de données (12) de la remorque, il est prévu un seul bus de données (12) de remorque sur lequel sont raccordés le dispositif de commande de freinage (18), les dispositifs d'éclairage (22, 23, 24) et le dispositif de commande (3) du dispositif de connexion (2).

9. Véhicule remorque (1) selon la revendication 8, **caractérisé en ce que** le système de bus de données (12) de la remorque comporte un bus de données (12) de remorque et un bus de données lumineuses (12a) de remorque, le dispositif de commande (3) du dispositif de connexion (2) et le dispositif de commande de freinage (18) étant raccordés sur le bus de données (12) de la remorque et le dispositif de commande de freinage (18), et les dispositifs d'éclairage (22, 23, 24) étant raccordés sur le bus de données d'éclairage (12a) de la remorque et le dispositif de commande de freinage (18) recevant par l'intermédiaire du bus de données (12) de remorque des signaux de commande des optiques (S2) de la part du dispositif de commande (3) et les retransmettant par l'intermédiaire du bus de données lumineuses (12a) de la remorque.
